# EUROPÄISCHE PATENTANMELDUNG

(11) **EP 3 725 900 A1**
(43) Veröffentlichungstag der Anmeldung: **21.10.2020**
(21) Anmeldenummer: 19169954.5
(22) Anmeldetag: 17.04.2019
(51) Int. Cl.: C21D 9/34, C21D 1/62, C21D 1/667

(54) **BAUTEIL UND VERFAHREN UND VORRICHTUNG ZUM ABSCHRECKEN EINES BAUTEILS**

(71) Anmelder: Mubea Performance Wheels GmbH, 5020 Salzburg (AT)
(72) Erfinder: GARTNER, Josef, 4962 Mining (AT); ANGERMEIER, Christoph, 84326 Falkenberg (DE)
(74) Vertreter: Neumann Müller Oberwalleney & Partner Patentanwälte

(57) **Zusammenfassung**

Die Erfindung betrifft ein Bauteil in Form eines Rades, umfassend: einen Nabenabschnitt (3), einen Felgenabschnitt (5) mit einem äußeren Felgenhorn (8) und einem inneren Felgenhorn (10), eine Mehrzahl von umfangsverteilten Speichen (4), die sich zwischen dem Nabenabschnitt (3) und dem Felgenabschnitt (5) erstrecken, wobei die Speichen (4) und der Nabenabschnitt (3) in Bezug auf eine Radmittelebene (E) in Richtung zum äußeren Felgenhorn (8) versetzt angeordnet sind und eine zur Radmittelebene (E) zugewandte Innenseite (13) und eine von der Radmittelebene (E) weg gerichtete Außenseite (12) aufweisen, wobei das äußere Felgenhorn (8) zumindest in einem Teilbereich größere Zugeigenspannungen aufweist als zumindest ein Teilbereich des inneren Felgenhorns (10).

## Beschreibung

Die Erfindung betrifft ein Bauteil in Form eines Rades sowie ein Verfahren und eine Vorrichtung zum Abschrecken eines Bauteils in Form eines Rades.

Aus der DE 34 43 226 C1 ist ein Verfahren zur Verbesserung der dynamischen Festigkeit von Radscheiben von Fahrzeugrädern aus aushärtbaren Aluminiumlegierungen bekannt. Dabei ist vorgesehen, dass die Räder nach dem Lösungsglühen in einem mittleren Bereich schneller als in den Randbereichen abgekühlt werden. Die Radscheiben werden mit einem Kühlmittel besprüht, das zunächst den mittleren Bereich und danach auch auf die äußeren Bereiche derart auftrifft, dass sich innerhalb des Rades ein Temperaturgradient in radialer Richtung bildet. In der Achse des Rades ist eine Sprühvorrichtung angeordnet, die zur Kühlung des inneren Bereichs des Rades vorgesehen ist, und weitere Sprühvorrichtungen sind zur Kühlung des äußeren Bereichs des Rades am Umfang des Rades angeordnet.

Aus der WO 2005/007917 A2 ist ein Verfahren zum Abschrecken eines Gussteils aus Leichtmetall bekannt, das mittels eines gasförmigen Abschreckmediums abgeschreckt wird. Bei Gussteilen mit unterschiedlichen Wanddicken erfolgt eine langsamere Abkühlung in den von dem Eintritt des Abschreckmediums entfernt liegenden Gussteilbereichen höherer Wandstärke. Bei einem Rad weist der Nabenbereich eine geringere Härte auf als ein Hornbereich der Felge, der eine geringere Wandstärke aufweist und den Durchlässen des Abschreckmediums zugewandt ist. Die Festigkeitsverteilung verläuft kontinuierlich in radialer Richtung von einem inneren Speichenbereich geringer Festigkeit zu einem äußeren Speichenbereich höherer Festigkeit.

Aus der DE 10 2012 103 884 A1 ist ein Verfahren zum Gießen eines Gussteils mit einer Durchgangsöffnung, insbesondere eines Zylinderkurbelgehäuses eines Verbrennungsmotors, bekannt. Nach dem Abgießen der Metallschmelze in die Gießform wird ein durch die Durchgangsöffnung führender Durchgangskanal hergestellt, der an einer Außenseite der Gießform mündet, und das Gussteil in der Gießform unter Durchströmung des Kanals mit einem Kühlmedium abgekühlt. Bei dem Kühlmedium kann es sich beispielsweise um Luft oder ein anderes gasförmiges Medium handeln, wobei für Fälle mit erhöhter Mindestabkühlrate auch die Verwendung von Wasserdampf oder ein Luft-Wasserdampf-Gemisch beschrieben wird.

Aus der DE 102 34 026 C1 ist eine Niederdruckgießkokille zur Herstellung von seitliche Hinterschneidungen aufweisende Rundgussteilen, insbesondere einer Fahrzeugfelge bekannt.

Aus der EP 3 162 460 A1 ist ein Leichtmetallgussbauteil aus einer untereutektischen Aluminium-Gusslegierung bekannt, das 3,5 bis 5,0 Gewichtsprozent Silizium und 0,2 bis 0,7 Gewichtsprozent Magnesium enthält.

Der vorliegenden Erfindung liegt die Aufgabe zugrunde, ein Bauteil in Form eines Rades vorzuschlagen, das möglichst geringe Eigenspannungen aufweist und damit eine hohe Lebensdauer hat. Ferner besteht die Aufgabe darin, ein entsprechendes Verfahren und eine Vorrichtung zum Abschrecken eines Bauteils in Form eines Rades vorzuschlagen, die eine schnelle Abkühlung ermöglichen und bei denen geringe Eigenspannungen im Bauteil erzeugt werden.

Zur Lösung wird ein Bauteil in Form eines Rades vorgeschlagen, umfassend: einen Nabenabschnitt; einen Felgenabschnitt mit einem äußeren Felgenhorn und einem inneren Felgenhorn, wobei zwischen dem äußeren Felgenhorn und dem inneren Felgenhorn eine Radmittelebene definiert ist; und eine Mehrzahl von umfangsverteilten Speichen, die sich zwischen dem Nabenabschnitt und dem Felgenabschnitt erstrecken; wobei die Speichen und der Nabenabschnitt in Bezug auf die Radmittelebene in Richtung zum äußeren Felgenhorn versetzt angeordnet sind und eine zur Radmittelebene zugewandte Innenseite und eine von der Radmittelebene weg gerichtete Außenseite aufweisen; wobei das äußere Felgenhorn zumindest in einem Teilbereich größere Zugeigenspannungen aufweist als zumindest ein Teilbereich des inneren Felgenhorns.

Mit Teilbereich sind insbesondere Umfangsteilbereiche zwischen zwei benachbarten Speichen gemeint. Die Zugeigenspannungen des äußeren Felgenhorns können in demselben und/oder einem anderen Umfangsteilbereich größer sein als die Eigenspannungen des inneren Felgenhorns. Größere Zugeigenspannungen zumindest in einem Teilbereich des äußeren Felgenhorns gegenüber einem Teilbereich des inneren Felgenhorns können beispielsweise durch einen aufspringenden Sägespalt beim Zertrennen des Felgenbettes, des inneren Felgenhorns und des äußeren Felgenhorns erkannt werden. Dabei springt der Sägespalt nach dem Auftrennen am äußeren Felgenhorn weiter auf, als am inneren Felgenhorn. Das äußere Felgenhorn weist insbesondere über seine gesamte Umfangserstreckung größere Zugeigenspannungen auf, als das innere Felgenhorn. Das äußere Felgenhorn kann neben zugeigenspannungsbehafteten Umfangsteilbereichen auch eigenspannungsfreie Umfangsteilbereiche aufweisen. Das innere Felgenhorn kann Umfangsteilbereiche mit Zugeigenspannungen, eigenspannungsfreie Umfangsteilbereiche und/oder Umfangsteilbereiche mit Druckspannungen aufweisen.

Die Speichen können, zumindest in einem Teilabschnitt, Druckeigenspannungen aufweisen. Insbesondere können die Speichen in einer Randschicht der Außenseite größere Druckeigenspannungen aufweisen als in einer Randschicht der Innenseite. Durch die größeren Druckeigenspannungen im Bereich der Außenseiten der Speichen im Vergleich zur Innenseite hat das Rad insgesamt nur einen geringen Verzug. Außerdem werden im Bereich der Außenseiten der Speichen besonders gute mechanische Eigenschaften erreicht, was insgesamt zu einer langen Lebensdauer des Rades führt. Im Rahmen der vorliegenden Offenbarung beinhaltet der Begriff Eigenspannungen mechanische Spannungen, die in dem Bauteil herrschen, wenn an diesem keine äußeren Kräfte angreifen und das sich im thermischen Gleichgewicht befindet. Eigenspannungen können bei der Herstellung eines Bauteils, beispielsweise im Rahmen einer Wärmebehandlung, entstehen oder gezielt durch mechanische Behandlung oder mittels Wärmebehandlung erzeugt werden. Vorliegend beziehen sich die Eigenspannungen auf den unbelasteten Zustand des Rades.

Das Rad kann einteilig oder mehrteilig hergestellt sein. Das Rad oder Teile davon können beispielsweise als Gussteil, das heißt mittels Gießen eines Gusswerkstoffs in ein Gießwerkzeug, als Schmiedeteil, das heißt durch Schmieden eines Schmiederohlings in einem Schmiedegesenk, oder als Frästeil, das heißt durch Fräsen aus einem Fräsrohling hergestellt werden. Bei der Herstellung eines einteiligen Rades sind Felgenstern und Felgenbett integral miteinander verbunden. Als Werkstoff kommen beispielsweise Leichtmetalllegierungen in Frage, die beispielsweise Aluminium als Hauptlegierungsbestandteil beinhalten können. Es sind jedoch beliebig andere metallische Gusswerkstoffe beziehungsweise Schmiedewerkstoffe möglich. Das Rad umfasst den Felgenabschnitt zur Aufnahme des Reifens, den Nabenabschnitt und die Radspeichen. Die Nabe und die Speichen können auch gemeinsam als Radscheibe oder Radstern bezeichnet werden. Der Radstern dient zur zentrischen Befestigung des Rades an einer Fahrzeugnabe. Bei einem mehrteiligen Rad werden der Radstern und die Felge zunächst separat hergestellt und nachträglich miteinander verbunden, beispielsweise durch kraft-, form- und/oder stoffschlüssige Verbindungen.

Soweit im Rahmen der vorliegenden Offenbarung ein Merkmal für eine oder die Speiche beschrieben wird, versteht es sich, dass dies gleichermaßen für jede weitere Speiche gelten kann. Die Speichen haben zumindest in einem Teilabschnitt auf der Außenseite größere Druckeigenspannung als auf der Innenseite. Mit Teilabschnitt ist in diesem Zusammenhang insbesondere ein radiales Teilstück der Speiche gemeint, das entsprechend außen eine größere Druckeigenspannung hat als innen. Nach einer möglichen Ausgestaltung können die Speichen so gestaltet sein, dass sie mindestens über ihre halbe radiale Erstreckung und/oder über ihre gesamte radiale Erstreckung in der Randschicht der Außenseite größere Druckeigenspannungen aufweisen als in der Randschicht der Innenseite. Dabei kann sich die Randschicht der Außenseite, welche unter Druckeigenspannungen steht, ausgehend von einer äußeren Stirnfläche der Speichen über wenigstens 10 %, insbesondere über wenigstens 20 %, insbesondere über wenigstens 30 % der axialen Dicke der Speichen erstrecken. Die Druckeigenspannungen können sich nach einer Ausführungsform auch über die gesamte Dicke der Speichen bis zur Innenseite erstrecken, wobei sie von der Außenseite zur Innenseite abnehmen. Alternativ kann das Rad auch so gestaltet sein, dass in der Randschicht der Innenseite Zugeigenspannungen anliegen. Solche Zugeigenspannungen können ausgehend von der inneren Oberfläche der Speichen beispielsweise über eine Tiefe von bis zu 30 % der axialen Dicke der Speichen vorhanden sein.

Nach einer möglichen Ausführungsform sind die Speichen im unbelasteten Zustand des Rades zwischen dem Felgenabschnitt und dem Nabenabschnitt insgesamt auf Druck belastet. Hiermit ist gemeint, dass die von der Felge radial außen auf die Speichen einwirkenden Kräfte nach radial innen gerichtet sind, während die von der Nabe radial innen auf die Speichen einwirkenden Kräfte nach radial außen gerichtet sind. Insgesamt stehen die Speichen damit unter radialer Druckbelastung, wohingegen die Felge in Umfangsrichtung auf Zug belastet wird. Ein solcher Belastungszustand kann beispielsweise mittels der Freischneidemethode ermittelt werden. Dabei wird das Felgenbett zwischen zwei benachbarten Speichen axial aufgeschnitten. Wenn die Speichen unter Druckbelastung stehen beziehungsweise der Felgenabschnitt unter Zugbelastung, springen die freigeschnittenen Enden des Felgenbettes auf.

Der Felgenabschnitt ist so gestaltet, dass das äußere Felgenhorn größere Zugeigenspannungen aufweist als das innere Felgenhorn. Dabei können die Zugeigenspannungen des inneren Felgenhorns beispielsweise um mehr als 10 Prozent kleiner sein, als die des äußeren Felgenhorns. Die Zugeigenspannungen können, im Längsschnitt durch die Felge betrachtet, vom äußeren Felgenhorn über das Felgenbett hin zum inneren Felgenhorn abnehmen. Dadurch, dass der Felgenabschnitt über seine gesamte axiale Länge unter Zugeigenspannungen steht, mit am äußeren Felgenhorn größeren Zugeigenspannungen als am inneren Felgenhorn, ergibt sich nach der Freischneidemethode ein leicht V-förmiger Spalt.

Eine Lösung der oben genannten Aufgabe besteht weiter in einem Verfahren zum Abschrecken eines Bauteils, wobei das Bauteil in Form eines Rades gestaltet ist, das einen Nabenabschnitt, einen Felgenabschnitt, und eine Mehrzahl von umfangsverteilten Speichen aufweist, die sich zwischen dem Nabenabschnitt und dem Felgenabschnitt erstrecken, wobei der Felgenabschnitt ein äußeres Felgenhorn und ein inneres Felgenhorn aufweist, zwischen denen eine Felgenmittelebene definiert ist, wobei die Speichen und der Nabenabschnitt in Bezug auf die Felgenmittelebene in Richtung zum äußeren Felgenhorn versetzt angeordnet sind und eine zur Felgenmittelebene zugewandte Innenseite und eine von der Felgenmittelebene weg gerichtete Außenseite aufweisen, mit folgender Abschreck-Reihenfolge des Verfahrens: Abschrecken der Speichen vor dem Abschrecken des Nabenabschnitts. Durch diese Abschreckreihenfolge erhält das äußere Felgenhorn größere Zugeigenspannungen in Umfangsrichtung als das innere Felgenhorn. Das Abschrecken der Speichen bezieht sich insbesondere auf einen Bereich radial zwischen dem Nabenabschnitt und dem Felgenabschnitt. Es können die Außenseite und/oder die Innenseite der Speichen abgeschreckt werden. Dies gilt auch für den Nabenabschnitt.

Ein Vorteil des beschriebenen Abschreckverfahrens ist, dass die hiermit hergestellten Bauteile einen besonders geringen Verzug, eine hohe Festigkeit und eine hohe Lebensdauer aufweisen. Insofern greifen hier die Vorteile des Verfahrens und die Vorteile des gemäß dem Verfahren hergestellten Bauteils ineinander. In diesem Zusammenhang versteht es sich, dass alle im Zusammenhang mit dem Erzeugnis genannten Merkmale und Vorteile auch für das Verfahren gelten, und umgekehrt.

Im Rahmen der vorliegenden Offenbarung soll, soweit von einer Abschreck-Reihenfolge von unterschiedlichen Bereichen des Bauteils die Rede ist, sich dies insbesondere auf den Startzeitpunkt des Abschreckens beziehen. Das heißt, das Abschrecken eines nachfolgenden Bereichs kann mit zeitlichem Versatz und/oder teilweise zeitlich überlappend mit einem vorhergehenden Bereich erfolgen. Bei zeitlichem Versatz beginnt das Abschrecken des nächsten Bereichs erst wenn das Abschrecken des vorherigen Bereichs abgeschlossen ist. Bei zeitlich überlappender Verfahrensführung ist vorgesehen, dass das Abschrecken für einen ersten Bereich zeitlich vor dem Abschrecken eines zweiten Bereichs beginnt, anschließend aber beide Bereiche zeitlich überlappend weiter abgeschreckt werden, bis die jeweilige gewünschte Zieltemperatur erreicht ist.

Die Speichen und/oder das innere Felgenhorn können zuerst abgeschreckt werden. Das Abschrecken des inneren Felgenhorns kann vor dem Abschrecken des Nabenabschnitts und/oder des Felgenbetts begonnen werden. Der Nabenabschnitt kann vor dem Felgenbett abgeschreckt werden. Diese Ausführungen tragen einzeln oder in Kombination dazu bei, in Umfangsrichtung wirkende Zugeigenspannungen im Bereich des inneren Felgenhorns zu erzeugen. Der Nabenabschnitt kann innen und außen abgeschreckt werden, wobei das Abschrecken der Innenseite des Nabenabschnitts vor, zeitgleich oder nach dem Abschrecken der Außenseite des Nabenabschnitts begonnen werden kann. Die Außenseite des Nabenabschnitts und der Bereich des inneren Felgenhorns können zeitgleich oder mit geringem zeitlichem Versatz abgeschreckt werden. Das Abschrecken des Felgenbetts kann nach dem Abschrecken der Speichen, des äußeren Felgenhorns und/oder der Innenseite des Felgenabschnitts begonnen werden.

Das Abschrecken der einzelnen Bereiche erfolgt vorzugsweise mit separat ansteuerbaren Kühl- beziehungsweise Abschreckeinheiten, wobei über den Umfang verteilt jeweils mehrere Einheiten angeordnet sein können. Beispielsweise kann das Abschrecken mit mindestens vier, fünf, insbesondere mit mindestens sieben oder sogar mehr als neun separat steuerbaren Abschreckeinheiten durchgeführt werden. Das Rad kann beim Abschrecken ortsfest gehalten oder gedreht werden, um ein besonders gleichmäßiges Kühl- beziehungsweise Abschreckverhalten über den Umfang zu erreichen.

Als Medium zum Abschrecken wird vorzugsweise Dampf oder ein Flüssigkeits-GasGemisch verwendet, insbesondere kann das Abschrecken mittels Wasser oder mittels eines Luft-Wasser-Gemischs erfolgen. Das Abschrecken wird mit hohen Drücken, beispielsweise mittels eines Düsendrucks von mindestens 30 bar durchgeführt, insbesondere mindestens 80 bar oder sogar über 100 bar. Das Abschrecken kann mit hohen Abkühlgeschwindigkeiten von beispielsweise mindestens 75 K/s durchgeführt werden, insbesondere mit mindestens 90 K/s oder sogar mehr als 100 K/s. Vor dem Abschrecken kann das Bauteil einem Lösungsglühen unterzogen werden. Das Abschrecken kann beispielsweise so lange durchgeführt werden, bis etwa die Auslagerungstemperatur erreicht ist. Insbesondere kann das Bauteil abgeschreckt werden, bis die Temperatur kleiner als das 1,1-fache und größer als das 0,9-fache der Auslagerungstemperatur ist. Die Auslagerungstemperatur kann beispielsweise zwischen 150°C und 200°C liegen. Nach dem Auslagern kann das Rad auf Raumtemperatur abgekühlt werden, insbesondere mittels Wasser.

Die oben genannte Aufgabe wird weiter gelöst durch eine Vorrichtung zum Abschrecken eines Bauteils in Form eines Rades, das einen Nabenabschnitt, einen Felgenabschnitt, und eine Mehrzahl von umfangsverteilten Speichen aufweist, die sich zwischen dem Nabenabschnitt und dem Felgenabschnitt erstrecken, wobei die Speichen und der Nabenabschnitt eine Außenseite und eine Innenseite aufweisen, wobei die Vorrichtung folgendes umfasst: mindestens eine Kühleinheit zum Abschrecken des Nabenabschnitts; mindestens eine Kühleinheit zum Abschrecken der Speichen; wobei die Kühleinheiten ausgestaltet sind, um jeweils ein Kühlmedium auf das Rad zu sprühen; sowie eine Steuereinheit, die ausgestaltet ist, um die Kühleinheiten zeitlich unabhängig voneinander anzusteuern.

Die Reihenfolge der Ansteuerung der Kühleinheiten kann nach Bedarf der zu erzeugenden Spannungsverteilung eingestellt werden, beispielsweise wie im Zusammenhang mit dem Verfahren beschrieben. Ein Vorteil der beschriebenen Abschreckvorrichtung ist, dass die hiermit abgeschreckten Bauteile einen besonders geringen Verzug und eine hohe Lebensdauer aufweisen. Insofern greifen hier die Vorteile der Vorrichtung, die des Verfahrens und die gemäß dem Verfahren beziehungsweise der Vorrichtung hergestellten Bauteils ineinander. In diesem Zusammenhang versteht es sich, dass alle im Zusammenhang mit dem Erzeugnis und dem Verfahren genannten Merkmale und Vorteile sinngemäß auch für die Vorrichtung gelten, und umgekehrt.

In Konkretisierung kann mindestens eine Kühleinheit zum Abschrecken der Außenseite der Speichen, mindestens eine Kühleinheit zum Abschrecken der Innenseiten der Speichen, mindestens eine Kühleinheit zum Abschrecken der Außenseite der Nabe und/oder mindestens eine Kühleinheit zum Abschrecken der Innenseite der Nabe vorgesehen sein. Es können weitere Kühleinheiten vorgesehen sein, insbesondere mindestens eine Kühleinheit zum Abschrecken des inneren Felgenhorns, eine Kühleinheit zum Abschrecken der Innenumfangsfläche der Felge und/oder eine Kühleinheit zum Abschrecken des äußeren Felgenhorns. Die Kühleinheiten zum Abschrecken des inneren Felgenhorns können mehrere Teileinheiten umfassen, insbesondere eine Einheit zum Abschrecken der Außenseite des inneren Felgenhorns und/oder eine Einheit zum Abschrecken der Innenseite des inneren Felgenhorns.

Die Abschreckvorrichtung kann ein erstes Vorrichtungsteil aufweisen, an dem eine erste Teilmenge der Kühleinheiten angeordnet ist, sowie ein oder mehrere relativ zum ersten Vorrichtungsteil bewegbares zweites Vorrichtungsteil, an dem eine zweite beziehungsweise weitere Teilmenge der Kühleinheiten angeordnet ist. Beispielsweise können alle zur Kühlung der Außenseite des Rades dienenden Kühleinheiten dem einen Vorrichtungsteil zugeordnet sein, und alle zur Kühlung der Innenseite des Rades dienenden Kühleinheiten an dem anderen Vorrichtungsteil angeordnet sein. Die beiden Vorrichtungsteile können relativ zueinander bewegbar ausgestaltet sein, das heißt, das eine relativ zum anderen, oder umgekehrt, oder beide. Die beiden Vorrichtungsteile können gehäuseartig gestaltet sein, so dass im geschlossenen Zustand das Rad in dem so gebildeten Hohlraum aufgenommen ist. Das Vorrichtungsteil, an dem das Rad gehalten wird, kann eine Dreheinheit zum Drehen des Rades aufweisen.

Bevorzugte Ausführungsformen werden nachstehend anhand der Zeichnungsfiguren erläutert. Es zeigt:
- Figur 1: ein erfindungsgemäßes Rad in perspektivischer Darstellung von schräg außen;
- Figur 2: das Rad aus Figur 1 in Axialansicht;
- Figur 3: das Rad gemäß Schnittlinie III-III aus Figur 2;
- Figur 4: das Rad gemäß Schnittlinie IV-IV aus Figur 2;
- Figur 5: das Rad aus Figur 1 in Radialansicht mit eingezeichneten Eigenspannungen am inneren und äußeren Felgenhorn;
- Figur 6: schematisch die Eigenspannungsverteilung in einer Randschicht der Außenseite einer Speiche;
- Figur 7: das Rad mit eingezeichneten Eigenspannungen im Bereich einer Speiche und einem Felgenabschnitt;
- Figur 8: das Rad aus Figur 1 in Radialansicht mit aufgeschnittenem Felgenbett;
- Figur 9: ein erfindungsgemäßes Rad in einer abgewandelten Ausführungsform im Halblängsschnitt mit schematisch in der Randschicht der Außenseite und der Innenseite einer Speiche eingezeichneter Eigenspannungsverteilung;
- Figur 10: das Rad aus Figur 9 in Radialansicht mit aufgeschnittenem Felgenbett;
- Figur 11: eine erfindungsgemäße Vorrichtung zum Abschrecken eines Rades schematisch im Längsschnitt;
- Figur 12: ein Zeit-Temperatur-Diagramm beim Abschreckens gemäß der Erfindung;
- Figur 13: ein Zeit-Temperatur-Diagramm beim Abschreckens nicht gemäß der Erfindung.

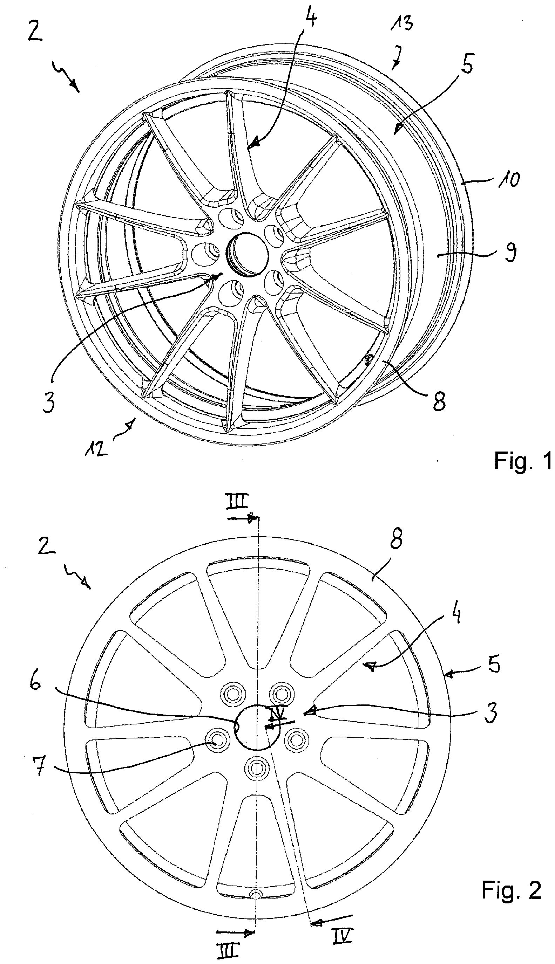

Die Figuren 1 bis 10, welche nachstehend gemeinsam beschrieben werden, zeigen ein erfindungsgemäßes Bauteil in Form eines Rades 2.

Das Rad 2 weist einen Nabenabschnitt 3, daran anschließende umfangsverteilte Speichen 4 und einen Felgenabschnitt 5 auf. Der Nabenabschnitt 3 dient zum Zentrieren und Befestigen des Rades 2 an einer Fahrzeug-Radnabe. Hierfür weist die Nabenabschnitt 3 eine zentrale Zentrierbohrung 6 und mehrere über den Umfang verteilte Durchgangsbohrungen 7 auf, die zusammen auch als Lochkreis bezeichnet werden und durch die entsprechende Befestigungsmittel durchgesteckt werden können. Nach einer alternativen Ausgestaltung kann die Nabe, statt Lochkreis, auch mit nur einer zentralen Bohrung zur Zentrierung und gleichzeitigen Befestigung ausgestaltet sein. Der Felgenabschnitt 4, auch kurz Felge genannt, ist zur Aufnahme eines Reifens gestaltet. Die Felge 4 umfasst ein äußeres Felgenhorn 8, ein Felgenbett 9 und ein inneres Felgenhorn 10.

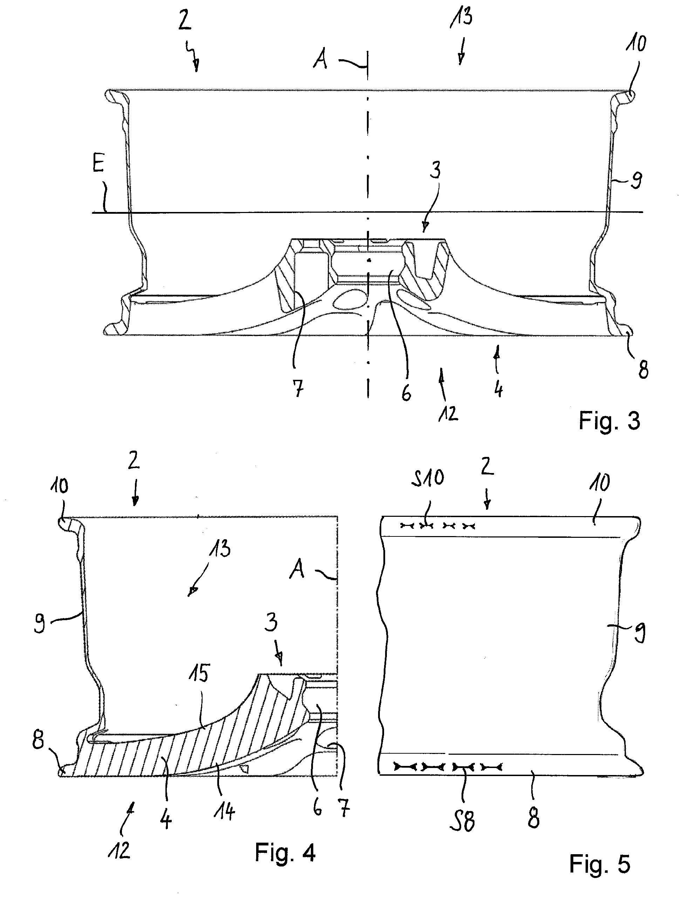

Es ist insbesondere in Figur 3 erkennbar, dass der Nabenabschnitt 3 und die Speichen 4, gemeinsam auch als Radstern bezeichnet, gegenüber einer zwischen den beiden Felgenhörnern 8, 9 liegenden Radmittelebene E versetzt angeordnet sind. Das Rad 2 hat eine Außenseite 12, die in montiertem Zustand des Rades sichtbar ist, und eine Innenseite 13 die in montiertem Zustand dem Fahrzeug zugewandt ist.

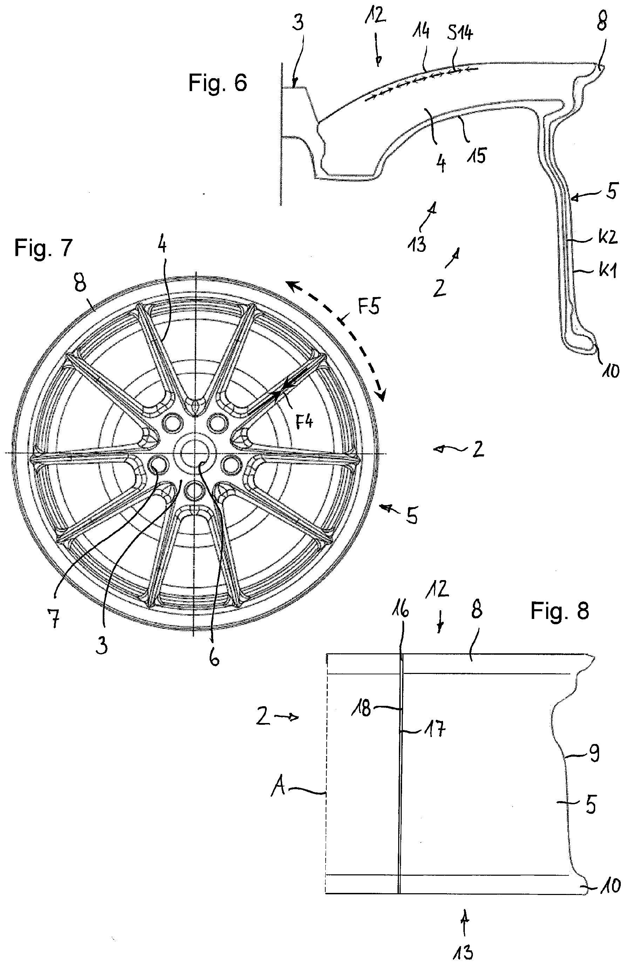

Figur 4 zeigt einen Halblängsschnitt durch eine Speiche 4 des fertig bearbeiteten Bauteils. Figur 5 zeigt die Felge 2 in Radialansicht mit schematisch eingezeichneten Eigenspannungen S8 im äußeren Felgenhorn 8 und schematisch eingezeichneten Eigenspannungen im inneren Felgenhorn 10. Figur 6 zeigt die Eigenspannungsverteilung in einer Randschicht der Außenseite 12 einer Speiche 4, wobei die äußere Kontur K1 in Figur 5 das Rohbauteil mit Fertigungsaufmaß darstellt, während die innere Kontur K2 die Kontur des fertig bearbeiteten Bauteils repräsentiert. Alle hier beschriebenen Merkmale können sich sowohl auf das Rohbauteil, beispielsweise einen Rohguss oder ein Rohschmiedeteil, als auch auf das fertig bearbeitete Bauteile beziehen.

Wie insbesondere aus Figur 5 hervorgeht, ist das Rad 2 so hergestellt, dass das äußere Felgenhorn 8 und das innere Felgenhorn 10 jeweils in Umfangsrichtung um die Längsachse A wirkende Zugeigenspannungen aufweist, die durch kleine Pfeile S8, S10 schematisch dargestellt sind. Dabei ist vorgesehen, dass die Zugeigenspannungen S8 des äußeren Felgenhorns 8 größer sind, als die Zugeigenspannungen S10 des inneren Felgenhorns 10. Dabei versteht es sich, dass das äußere Felgenhorn 8 nur in Umfangsteilbereichen Zugeigenspannungen aufweisen kann und in anderen eigenspannungsfrei sein kann und/oder, dass das innere Felgenhorn 10 zumindest in Umfangsteilbereichen eigenspannungsfrei oder mit Druckeigenspannungen behaftet sein kann. Dabei sind die Zugeigenspannungen des äußeren Felgenhorns 8 zumindest in einem Umfangsteilbereich größer als die anliegenden Eigenspannungen des inneren Felgenhorns 10.

Es ist ferner in Figur 6 erkennbar, dass die Speichen 4 zumindest in einer Randschicht 14 der Außenseite 12 Druckeigenspannungen aufweisen, die durch kleine Pfeile S14 dargestellt sind. Es ist vorgesehen, dass die Druckeigenspannungen in der Randschicht 14 der Außenseite 12 größer sind, als in der Randschicht 15 der Innenseite 13. Dies kann sich auf einen Teilabschnitt der radialen Erstreckung einer jeweiligen Speiche 4 oder auf die gesamte Radialerstreckung der Speiche beziehen. Es ist möglich, dass die Druckeigenspannungen über der radialen Erstreckung der Speichen 4 variieren. Im unbelasteten Zustand ist vorzugsweise die Randschicht 14 der gesamten Außenseite 12 der Speichen 4 druckeigenspannungsbehaftet beziehungsweise eigenzugspannungsfrei.

Bei der vorliegenden Ausführungsform sind nicht nur Teilbereiche der Speichen 4 mit Druckeigenspannungen belegt, sondern die gesamten Speichen an sich sind jeweils auf Druck belastet. Mit anderen Worten sind die Speichen, als theoretisches Denkmodell, zwischen dem Nabenabschnitt 3 und dem Felgenring 5 eingeklemmt, das heißt, auf die inneren Enden der Speichen 4 wirken von dem Nabenabschnitt 2 nach radial außen gerichtete Kräfte, während auf die äußeren Enden der Speichen 4 von dem Felgenring 5 nach radial innen gerichtete Kräfte einwirken. Dies gilt zumindest für eine Randschicht der Außenseite 12. In einer Randschicht der Innenseite 13 liegen geringere Druckeigenspannungen vor, als in der Randschicht der Außenseite 12, wobei hier auch Zugeigenspannungen anliegen können. Insgesamt stehen die Speichen 4 damit zumindest im Bereich der Außenseite 12 unter radialer Druckbelastung, wohingegen die Felge 5 in Umfangsrichtung auf Zug belastet wird. Diese Belastungsverhältnisse sind in Figur 7 gezeigt, in der beispielhaft in einer Speiche 4 die Druckbelastung durch aufeinander zu wirkende Pfeile F4 und in der Felge 5 die Zugbelastung durch voneinander weg gerichtete gestrichelte Pfeile F5 dargestellt sind.

Ein solcher Belastungszustand kann beispielsweise mittels der Freischneidemethode ermittelt werden. Dabei wird das Felgenbett 9 zwischen zwei in Umfangsrichtung benachbarten Speichen 4 axial aufgeschnitten. Wenn der Felgenabschnitt 5 unter Zugbelastung in Umfangsrichtung steht, beziehungsweise die Speichen 4 unter Druckbelastung stehen, springen die freigeschnittenen Enden des Felgenabschnittes 5 auf. Figur 8 zeigt das Rad 2 in Radialansicht mit aufgeschnittenem Felgenabschnitt 5. Es ist deutlich der Schlitz 16 erkennbar, der durch das Aufspringen der freigeschnittenen Felgensegmente 17, 18 entstanden ist. Dabei öffnet sich der Schlitz 16 ausgehend vom inneren Felgenhorn 10 in axialer Richtung zum äußeren Felgenhorn 8. Das bedeutet, dass die Zugeigenspannungen S8 am äußeren Felgenhorn 8 größer sind, beziehungsweise vor dem Aufschneiden waren, als die Eigenspannungen 10 (Druck- oder Zugeigenspannungen) des inneren Felgenhorns 8.

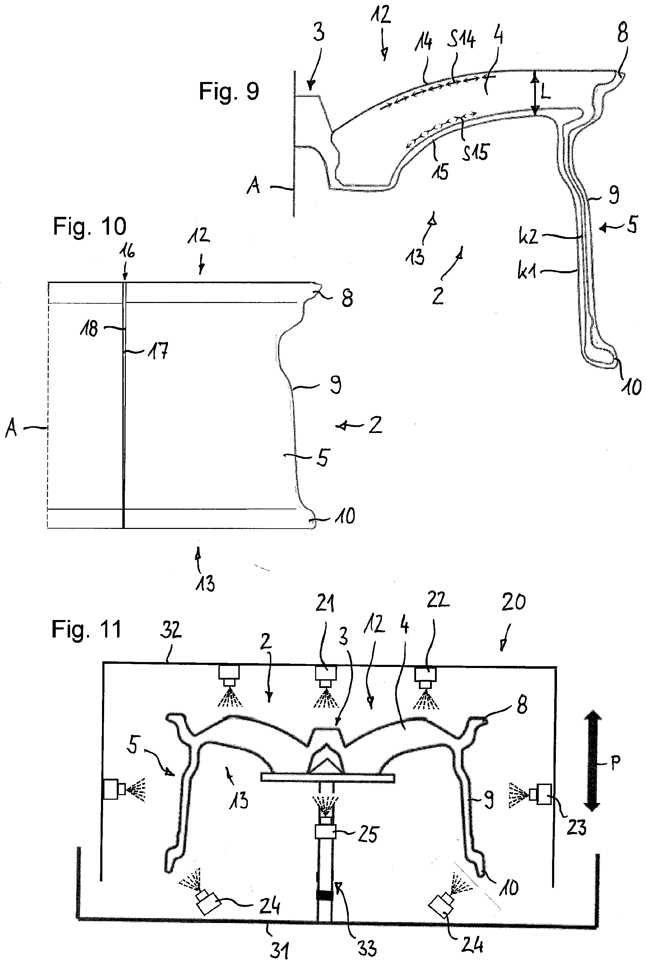

Die Figuren 9 und 10 zeigen ein erfindungsgemäßes Bauteil für ein Rad 2 in einer abgewandelten Ausführungsform. Dieses entspricht weitestgehend der Ausführungsform gemäß den Figuren 1 bis 8, auf deren Beschreibung insofern Bezug genommen wird. Dabei sind gleiche Einzelheiten mit gleichen Bezugszeichen versehen wie in den obigen Figuren.

In Gemeinsamkeit zur obigen Ausführungsform liegen bei dem Rad 2 nach Figur 9 und 10 in der Randschicht der Außenseite 14 der Speichen 4 Druckeigenspannungen S14 an. Demgegenüber stehen die Speichen 4 in der Randschicht 15 der Innenseite 13 unter Zugeigenspannungen S15. Das Rad 2 weist eine variable Eigenspannungsverteilung über der axialen Erstreckung L der Speichen 4 auf, die ausgehend von der Randschicht 14 der Außenseite 12 hin zur Randschicht 15 der Innenseite 13 von Druckeigenspannungen S14 hin zu Zugeigenspannungen S15 wechselt. Im Inneren der Speichen 4 ist eine eigenspannungsfreie Übergangsschicht, in der die Spannungen von Druck- zu Zugeigenspannungen wechseln. Bei dieser Ausführungsform sind die Speichen 4, als theoretisches Denkmodell, in der äußeren Randschicht 14 zwischen dem Nabenabschnitt 3 und dem Felgenring 5 eingeklemmt. Folglich wirken an der axial außen liegenden Seite 12 des Rades 2 auf die radial inneren Enden der Speichen 4 vom Nabenabschnitt 3 nach radial außen gerichtete Kräfte, während auf die radial äußeren Enden der Speichen 4 von dem Felgenring 5 nach radial innen gerichtete Kräfte einwirken. Demgegenüber liegen in der Randschicht 15 der Innenseite 13 Zugeigenspannungen S15 an, das heißt an der axial innen liegenden Seite des Felgensterns wirken auf die radial inneren Enden der Speichen 4 vom Nabenabschnitt 3 nach radial innen gerichtete Kräfte, während auf die äußeren Enden der Speichen 4 von dem Felgenring 5 nach radial außen gerichtete Kräfte einwirken. Insgesamt stehen die Speichen damit im Bereich der Außenseite 14 unter radialer Druckbelastung und im Bereich der Innenseite 13 unter radialer Zugbelastung. Entsprechend ist der Felgenabschnitt 5 im Bereich des äußeren Felgenhorns 8 in Umfangsrichtung auf Zug belastet, während sie im Bereich des inneren Felgenhorns 10 in Umfangsrichtung auf Druck belastet wird.

Bei dieser Ausgestaltung mit den genannten Eigenspannungen ergibt sich durch Freischneiden des Felgenbetts 5 im Umfangsbereich zwischen zwei Speichen 4, dass die freigeschnittenen Enden 17, 18 des Felgenbettes im axialen Abschnitt des äußeren Felgenhorns 8 aufspringen, während sie im axialen Bereich des inneren Felgenhorns 10 aneinander angenähert sind. Insgesamt ergibt sich bei dieser Ausführungsform ein sich vom äußeren Felgenhorn 8 in Richtung zum inneren Felgenhorn 10 verjüngender Spalt 16, wie in Figur 10 gezeigt, wobei der Öffnungswinkel des Spalts hier größer ist, als bei der obigen Ausführungsform.

Für beide vorstehend beschriebenen Ausführungsformen gilt, dass als Werkstoff für das Rad beispielsweise ein Leichtmetall wie Aluminium oder eine Aluminium-Legierung oder Magnesium oder eine Magnesium-Legierung verwendet werden kann, ohne hierauf eingeschränkt zu sein. Eine Aluminium-Gusslegierung kann beispielsweise mindestens 93,0 Gewichtsprozent Aluminium, 3,5 bis 5,0 Gewichtsprozent Silizium, 0,2 bis 0,7 Gewichtsprozent Magnesium, und optional weitere Legierungselemente von bis zu 1,5 Gewichtsprozent aufweisen.

Nach dem Herstellen des Rohteils, beispielsweise durch Gießen, Schmieden, oder Fräsen, wird dieses wärmebehandelt, insbesondere einem Lösungsglühen unterzogen. Nach der Wärmebehandlung wird das Bauteil abgeschreckt, wobei das Bauteil 2 nach dem Lösungsglühen und vor dem Abschrecken noch vorgekühlt werden kann. Das Abschrecken wird insbesondere so durchgeführt, dass die gewünschte Eigenspannungsverteilung im Bauteil erzeugt wird.

Die Figur 11 zeigt eine erfindungsgemäße Vorrichtung 20 zum Abschrecken eines Bauteils in Form eines Rades 2. Es ist erkennbar, dass die Vorrichtung 20 mehrere Kühleinheiten 21, 22, 23, 24, 25 zum Abschrecken des Rades 2 aufweist. Bei der vorliegenden Ausführungsform sind mindestens eine Kühleinheit 21, 25 zum Abschrecken der Nabe 3; mindestens eine Kühleinheit 22 zum Abschrecken der der Speichen 4; mindestens eine Kühleinheit 23 zum Abschrecken der Außenseiten 12 der Felge 5; und mindestens eine Kühleinheit 24 zum Abschrecken des inneren Felgenhorns 10 vorgesehen. Es können ferner mindestens eine Kühleinheit zum Abschrecken des äußeren Felgenhorns 8 und/oder mindestens eine Kühleinheit zum Abschrecken der Innenseite 13 der Felge 5 vorgesehen sein (nicht dargestellt).

Die Kühleinheiten 21, 22, 23, 24, 25 sind ausgestaltet, um jeweils ein Kühlmedium auf das Rad zu sprühen. Sie sind separat von einer Steuereinheit (nicht gezeigt) hinsichtlich Start und Dauer des Kühlens sowie gegebenenfalls zumindest eines weiteren, die Abschreckwirkung beeinflussenden Parameters, wie Temperatur oder Druck des Kühlmediums, steuerbar. Als Kühlmedium wird beispielsweise Dampf oder ein Flüssigkeits-Gas-Gemisch, insbesondere Wasser oder ein Wasser-Luft-Gemisch verwendet. Die Kühleinheiten 21, 22, 23, 24, 25 umfassen entsprechende Düsen, durch die der Sprühnebel mit hohen Drücken auf das Bauteil 2 aufgesprüht wird. Dabei kann das Abschrecken mit hohem Düsendruck von mindestens 30 bar, insbesondere mindestens 80 bar durchgeführt werden. Es lassen sich mit der Vorrichtung 20 hohe Abkühlgeschwindigkeiten von mindestens 75 K/s, insbesondere mit mindestens 90 K/s oder sogar mehr als 100 K/s erreichen.

Es ist erkennbar, dass die Abschreckvorrichtung 20 ein erstes Vorrichtungsteil 31 aufweist, an dem die Kühleinheiten 24, 25 angeordnet sind, die auf die Innenseite 13 des Rades 2 einwirken, sowie ein zweites Vorrichtungsteil 32, an dem die Kühleinheiten 21, 22, 23 angebracht sind, die auf die Außenseite 12 des Rades 2 kühlend einwirken. Vorliegend ist das zweite Vorrichtungsteil 32, das auch als Oberteil bezeichnet werden kann, relativ zum ersten Vorrichtungsteil 31, das auch als Unterteil bezeichnet werden kann, axial bewegbar gestaltet, was durch den Pfeil P auf der rechten Seite angedeutet ist. Die beiden Vorrichtungsteile 31, 32 sind gehäuseartig gestaltet. Das Rad 2 wird auf ein Trägerelement 33 des ersten Vorrichtungsteils 31 aufgesetzt, dann wird das obere Vorrichtungsteil 32 in Richtung Rad 2 bis zum Erreichen des gewünschten Abstandes abgesenkt. Schließlich beginnt der Abschreckprozess. Das untere Vorrichtungsteil 31 kann eine Dreheinheit zum drehenden Antreiben des Rades 2 beim Abschrecken aufweisen.

Die Kühleinheiten zum Abschrecken des Rades 2 können beispielsweise in der folgenden Reihenfolge angesteuert: die Kühleinheiten 22 zum Kühlen der Außenseite 12 der Speichen 4 vor den Kühleinheiten 21 des Nabenabschnitts 3, danach die Kühleinheit 22 zum Kühlen der Innenseite 13 des Nabenabschnitts 2, danach die Kühleinheiten 25 zum Kühlen der Innenseite 13 des Felgenbetts 9 beziehungsweise des Nabenabschnitts 3 und danach die Kühleinheiten 23 zum Kühlen der Außenseite 12 des Felgenbetts 9. Die Kühleinheiten 24 zum Kühlen des inneren Felgenhorn 10 können zeitlich mit der Außenseite 12 der Speichen 4, zeitlich vor den Kühleinheiten 21, 25 des Nabenabschnitts 2 und/oder vor den Kühleinheiten 23 des Felgenbetts aktiviert werden.

Das Kühlen beziehungsweise Abschrecken mit den einzelnen Kühleinheiten setzt in der oben genannten Reihenfolge ein, kann dann aber weiter zumindest teilweise mit zeitlicher Überschneidung der einzelnen Kühleinheiten erfolgen, und zwar jeweils solange, bis die gewünschte Zieltemperatur im zu kühlenden Radbereich erreicht ist. Das Abschrecken kann beispielsweise so lange durchgeführt werden, bis die Auslagerungstemperatur erreicht ist. Nach dem Auslagern kann das Rad auf Raumtemperatur abgekühlt werden, insbesondere mittels Wasser.

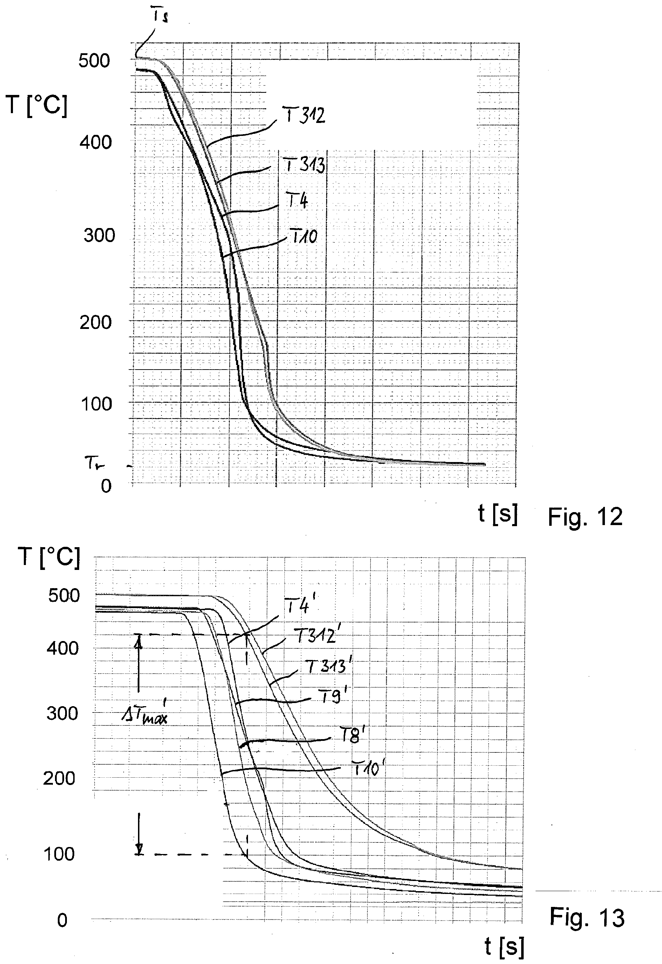

Die Figur 12 zeigt ein Zeit-Temperatur-Diagramm während des Abschreckens gemäß der Erfindung von der Ausgangstemperatur Ts nach dem Lösungsglühen bis zur Raumtemperatur T. Auf der x-Achse ist die Zeit abgetragen, auf der y-Achse die Temperatur T. Es sind vier Kurven eingezeichnet, und zwar eine erste für die Temperatur T312 im Bereich des Lochkreises 3 an der Außenseite 12, eine zweite für die Temperatur T313 im Bereich des Lochkreises 3 an der Innenseite 13, eine dritte für die Temperatur T4 in einer Speiche 4 und eine vierte für die Temperatur T10 am inneren Felgenhorn 10. Es ist erkennbar, dass die vier Kurven benachbart zueinander und im Wesentlichen äquidistant zueinander verlaufen, das heißt, dass die zu einer jeweiligen Zeit maximal auftretenden Temperaturdifferenzen im Rad 2 besonders gering sind. Dies führt zu geringen Eigenspannungen im Rad 2, was wiederum zu einer langen Lebensdauer beiträgt.

Verglichen hiermit zeigt Figur 13 ein Zeit-Temperatur-Diagramm während des Abschreckens für einen konventionellen, das heißt nicht erfindungsgemäßen Abschreckprozess in einem Wasserbad. Es sind sechs Kurven eingezeichnet, und zwar eine erste für die Temperatur T312' im Bereich des Lochkreises an der Außenseite, eine zweite für die Temperatur T313' im Bereich des Lochkreises an der Innenseite, eine dritte für die Temperatur T4' in einer Speiche und eine vierte für die Temperatur T10' am inneren Felgenhorn, eine fünfte für die Temperatur T8' am äußeren Felgenhorn und eine sechste für die Temperatur T9' am Felgenbett. Es ist erkennbar, dass die sechs Kurven zu unterschiedlichen Zeitpunkten abfallen, das heißt, dass die Kühlung zu unterschiedlichen Zeiten in den unterschiedlichen Bereichen einsetzt. Außerdem divergieren die Temperaturkurven ausgehend von der Starttemperatur Ts (ca. Lösungsglühtemperatur) mit zunehmender Zeit deutlich voneinander. Diese beiden Sachverhalte führen zu besonders hohen maximal auftretenden Temperaturdifferenzen ΔTmax' im Rad 2 und damit zu hohen Eigenspannungen im Rad 2.

### Bezugszeichenliste

- 2: Rad
- 3: Nabenabschnitt
- 4: Speichen
- 5: Felgenabschnitt
- 6: Zentrierbohrung
- 7: Durchgangsbohrungen
- 8: äußeres Felgenhorn
- 9: Felgenbett
- 10: inneres Felgenhorn
- 12: Außenseite
- 13: Innenseite
- 14: Randschicht
- 15: Randschicht
- 16: Schlitz
- 17: freigeschnittenes Ende
- 18: freigeschnittenes Ende
- 20: Vorrichtung
- 21-25: Kühleinheiten
- 31: Vorrichtungsteil
- 32: Vorrichtungsteil
- 33: Trägerelement

- A: Achse
- E: Ebene
- K: Kontur
- L: Erstreckung
- P: Pfeil
- S: Eigenspannung
- T: Temperatur
- t: Zeit

## Patentansprüche

1. Bauteil in Form eines Rades, umfassend:
einen Nabenabschnitt,
einen Felgenabschnitt (5) mit einem äußeren Felgenhorn (8) und einem inneren Felgenhorn (10), wobei zwischen dem äußeren Felgenhorn (8) und dem inneren Felgenhorn (10) eine Radmittelebene (E) definiert ist, und
eine Mehrzahl von umfangsverteilten Speichen (4), die sich zwischen dem Nabenabschnitt (3) und dem Felgenabschnitt (5) erstrecken,
wobei die Speichen (4) und der Nabenabschnitt (3) in Bezug auf die Radmittelebene (E) in Richtung zum äußeren Felgenhorn (8) versetzt angeordnet sind und eine zur Radmittelebene (E) zugewandte Innenseite (13) und eine von der Radmittelebene (E) weg gerichtete Außenseite (12) aufweisen,
**dadurch gekennzeichnet, dass**
das äußere Felgenhorn (8) zumindest in einem Teilbereich größere Zugeigenspannungen aufweist als zumindest ein Teilbereich des inneren Felgenhorns (10).

2. Bauteil nach Anspruch 1,
**dadurch gekennzeichnet, dass** das äußere Felgenhorn (8) über seine gesamte Umfangserstreckung größere Zugeigenspannungen aufweist, als das innere Felgenhorn (10).

3. Bauteil nach Anspruch 1 oder 2,
**dadurch gekennzeichnet, dass** das äußere Felgenhorn (8) Zugspannungen aufweist und die Speichen (4) zumindest in einem Teilbereich Druckspannungen aufweisen.

4. Bauteil nach einem der Ansprüche 1 bis 3,
**dadurch gekennzeichnet, dass** die Speichen (4), zumindest in einem Teilabschnitt, in einer Randschicht der Außenseite (12) größere Druckeigenspannungen aufweisen, als in einer Randschicht der Innenseite (13), wobei die Speichen (4) in der Randschicht der Innenseite (13) Druckeigenspannungen oder Zugeigenspannungen aufweisen.

5. Bauteil nach einem der Ansprüche 1 bis 4,
**dadurch gekennzeichnet, dass** die Speichen (4) in unbelastetem Zustand des Rades (2) zwischen dem Felgenabschnitt (5) und dem Nabenabschnitt (3) auf Druck belastet sind, wobei der Felgenabschnitt (5) zumindest im Bereich des äußeren Felgenhorns (8) in Umfangsrichtung auf Zug belastet ist.

6. Verfahren zum Abschrecken eines Bauteils,
wobei das Bauteil in Form eines Rades (2) gestaltet ist, das einen Nabenabschnitt (3), einen Felgenabschnitt (5), und eine Mehrzahl von umfangsverteilten Speichen (4) aufweist, die sich zwischen dem Nabenabschnitt (3) und dem Felgenabschnitt (5) erstrecken,
wobei der Felgenabschnitt (5) ein äußeres Felgenhorn (8), ein Felgenbett (9) und ein inneres Felgenhorn (10) aufweist, zwischen denen eine Radmittelebene (E) definiert ist,
wobei die Speichen (4) und der Nabenabschnitt (3) in Bezug auf die Radmittelebene (E) in Richtung zum äußeren Felgenhorn (8) versetzt angeordnet sind und eine zur Radmittelebene (E) zugewandte Innenseite (13) und eine von der Radmittelebene (E) weg gerichtete Außenseite (12) aufweisen,
**dadurch gekennzeichnet dass** die Speichen (4) vor dem Nabenabschnitt (3) abgeschreckt werden.

7. Verfahren nach Anspruch 6,
**dadurch gekennzeichnet, dass** der Nabenabschnitt (3) vor dem Felgenbett (9) abgeschreckt wird.

8. Verfahren nach Anspruch 6 oder 7,
**dadurch gekennzeichnet, dass** das innere Felgenhorn (10) vor dem Felgenbett (9) abgeschreckt wird.

9. Verfahren nach einem der Ansprüche 6 bis 8,
**dadurch gekennzeichnet, dass** das Abschrecken mittels eines Flüssigkeits-Gas-Gemischs erfolgt, insbesondere mittels eines Luft-Wasser-Gemischs.

10. Verfahren nach einem der Ansprüche 6 bis 9,
**dadurch gekennzeichnet, dass** das Abschrecken mit mindestens vier, insbesondere mindestens fünf separat steuerbaren Kühleinheiten (21-25) durchgeführt wird, welche zeitlich nacheinander angesteuert werden.

11. Verfahren nach einem der Ansprüche 7 bis 10,
**dadurch gekennzeichnet, dass** das Abschrecken mittels eines Drucks von mindestens 30 bar durchgeführt wird, insbesondere mindestens 80 bar.

12. Vorrichtung zum Abschrecken eines Bauteils in Form eines Rades, das einen Nabenabschnitt (3), einen Felgenabschnitt (5), und eine Mehrzahl von umfangsverteilten Speichen (4) aufweist, die sich zwischen dem Nabenabschnitt (3) und dem Felgenabschnitt (5) erstrecken, wobei die Speichen (4) und der Nabenabschnitt (3) eine Außenseite (12) und eine Innenseite (13) aufweisen, umfassend:
mindestens eine Kühleinheit (21) zum Abschrecken der Außenseite (12) des Nabenabschnitts (3),
mindestens eine Kühleinheit (25) zum Abschrecken der Innenseite (13) des Nabenabschnitts (3),
mindestens eine Kühleinheit (22) zum Abschrecken der Außenseiten (12) der Speichen (4),
mindestens eine Kühleinheit (23) zum Abschrecken des Felgenabschnitts (5),
wobei die Kühleinheiten (21, 22, 23, 25) ausgestaltet sind, um jeweils ein Kühlmedium auf das Rad zu sprühen,
eine Steuereinheit, die ausgestaltet ist, um die Kühleinheiten (21, 22, 23, 25) zeitlich unabhängig voneinander anzusteuern.

13. Vorrichtung nach Anspruch 12, ferner umfassend:
mindestens eine Kühleinheit (24) zum Abschrecken des inneren Felgenhorns (24), welche individuell ansteuerbar ist.
